# EUROPÄISCHE PATENTSCHRIFT

(11) **EP 0 875 487 B1**
(45) Veröffentlichungstag und Bekanntmachung des Hinweises auf die Patenterteilung: **12.05.2004**
(21) Anmeldenummer: 98103801.1
(22) Anmeldetag: 04.03.1998
(51) Int. Cl.: C01B 3/32, C01B 3/38, B01J 8/00, B01J 8/12, H01M 8/06

(54) **Reformierungsreaktor mit Katalysatorschüttung**
Reformer with catalyst packing
Réacteur de réformage rempli d'un lit catalytique

(30) Priorität: 29.03.1997 DE 19713244
(43) Veröffentlichungstag der Anmeldung: 04.11.1998
(73) Patentinhaber: Ballard Power Systems AG, 73230 Kirchheim / Teck-Nabern (DE)
(72) Erfinder: Autenrieth, Rainer, 89155 Erbach (DE); Christen, Andreas, 53940 Kehr (DE)
(74) Vertreter: Beyer, Andreas, Dr.

(56) Entgegenhaltungen:
- EP-A- 0 812 802
- DE-A- 4 031 514
- DE-U- 9 000 603
- US-A- 2 671 719
- PATENT ABSTRACTS OF JAPAN vol. 013, no. 151 (C-584), 12.April 1989 & JP 63 310703 A (FUJI ELECTRIC CO LTD), 19.Dezember 1988,

## Beschreibung

Die Erfindung bezieht sich auf einen Reformierungsreaktor mit einem Reaktionsraum, nach dem Oberbegriff von Anspruch 1.

Derartige Reformierungsreaktoren sind in vielerlei Ausführungen bekannt, beispielsweise für die Wasserdampfreformierung von Methanol zur Gewinnung von Wasserstoff, der z.B. als Brennstoff für eine Brennstoffzellenanordnung genutzt werden kann. Reaktoren dieser Art sind beispielsweise in den Offenlegungsschriften DE 44 23 587 A1 und DE 44 20 752 A1 offenbart.

In vielen Fällen tritt während des Betriebs solcher Reaktoren durch chemische Vorgänge ein Volumenschwund der Katalysatorschüttung im Reaktionsraum auf. Dieser Volumenschwund der Katalysatorschüttung hat eine Verringerung des Reaktionsumsatzes zur Folge.

In der Patentschrift US 2 671 719 ist eine Reformierungsanlage zur industriellen Gewinnung von Wasserstoff und Kohlenmonbxid beschrieben, bei der zunächst in einer Reduktionsreaktionskammer ein Kohlenwasserstoff mit einem Metalloxid unter Bildung von Kohlenstoffoxiden, Wasserstoff, Wasser und freiem Metall reagiert wird und die zugehörige Suspension anschließend als Fontäne in einen Reformierungsreaktionsraum eingespeist wird. In diesem Reaktionsraum bildet sich eine feste Phase, aus der Feststoffpartikel ausfallen, die aus freiem Metall oder einem Reformierungskatalysator bestehen, z.B. Nickel oder Eisen, das von Aluminium- oder Magnesiumoxid getragen wird. Die Eisenkomponente dient als Sauerstoffträger, während Nickel und das Aluminium- oder Magnesiumoxid als primärer Reformierungskatalysator fungieren. Über einen Einfülltrichter und eine von diesem schräg nach unten in den Reformierungsreaktionsraum führende .Speiseleitung, in die ein Ventil eingebracht ist, wird durch entsprechende Betätigung des Ventils freies Eisen in den Reformierungsreaktionsraum nachgefüllt, sobald dort eine merkliche Bildung von Eisenoxid beobachtet wird und aus diesem Grund die Feststoffe über eine Auslaßleitung aus dem Reaktionsraum abgelassen werden.

In dem Gebrauchsmuster DE 90 00 603 U1 ist ein Reaktor zur Durchführung katalytischer Gasreaktionen mit einem im wesentlichen kugelförmigen, druckfesten Reaktormantel und einem im Reaktormantel angeordneten kugelförmigen Katalysatorbett sowie mit einem Synthesegaseintritt mit einem im Zentrum des kugelförmigen Katalysatorbetts angeordneten Synthesegasverteiler und mit wenigstens einem Synthesegasaustritt beschrieben. Zur Bildung einer definierten Synthesegasströmung radial von innen nach außen ist der Synthesegasverteiler kugelförmig mit einer perforierten Außenfläche ausgebildet, und der Synthesegasaustritt ist von einer Mehrzahl am Reaktormantel verteilt angeordneter Gasaustritte mit den Reaktormantel durchdringenden Gassammelleitungen gebildet. Im Bereich der Reaktoroberseite ist ein mit Katalysator gefüllter Katalysatordom vorgesehen, in welchem Katalysatormaterial bevorratet ist, das zwecks Volumenausgleich beim erstmaligen Anfahren des Reaktors selbsttätig nach unten in den Reaktormantel nachrutschen kann.

In der Offenlegungsschrift DE 40 31 514 A1 ist ein Rohrbündelreaktor zur Durchführung katalytischer Prozesse offenbart, bei dem das in den Rohren befindliche Katalysatormaterial durch chemische Reduktion z.B. mittels Wasserstoff und/oder Kohlenmonoxid bei Inbetriebnahme des Reaktors um einen gewissen Volumenanteil schrumpft. Die oberen, freien Enden der Katalysatorrohre sind mit Vorratsschuten ausgerüstet, deren Innenvolumen mindestens dem bei der Volumenreduzierung sich ergebenden Katalysatorvolumen entspricht und in denen Katalysatormaterial bevorratet ist, das während der Katalysatorvolumenverminderung in den eigentlichen Rohrbereich nachrutschen kann. Im Betrieb des Reaktors werden die Rohre längsseits vom zu reagierenden Stoffgemisch durchströmt, das am oberen Rohrende ein- und am unteren Rohrende austritt.

Der Erfindung liegt als technisches Problem die Bereitstellung eines Reformierungsreaktors der eingangs genannten Art zugrunde, bei dem mit relativ geringem Aufwand Maßnahmen gegen einen Volumenschwund an Katalysatormaterial im Reaktionsraum und eine davon verursachte Verringerung des Reaktionsumsatzes im Betrieb des Reaktors getroffen sind.

Die Erfindung löst dieses Problem durch die Bereitstellung eines Reformierungsreaktors mit den Merkmalen des Anspruchs 1. Bei diesem Reaktor ist dem Reaktionsraum ein Katalysatorvorratsbehälter zugeordnet, der mit ihm so in Verbindung steht, daß Katalysatormaterial selbsttätig aus dem Vorratsbehälter in den Reaktionsraum nachgefüllt wird. Damit wird eine automatische Nachfüllung von Katalysatormaterial für den Reaktionsraum realisiert, womit ein gegebenenfalls auftretender Volumenschwund der Katalysatorschüttung im Reaktionsraum kompensiert wird. Ein derartiger Volumenschwund tritt z.B. bei hochbelasteten Methanolreformierungskatalysatoren auf. Eine hohe Belastung des Katalysatormaterials ist insbesondere beim Betrieb eines Methanolreformierungsreaktors zur Wasserstofferzeugung für ein Brennstoffzellensystem in mobilen Anwendungen aus baulichen Gründen notwendig.

Bei dem erfindungsgemäßen Reformierungsreaktor tritt das aus dem Vorratsbehälter kommende Katalysatormaterial an einer Stelle in den Reaktionsraum ein, die von bereits teilweise im Reaktionsraum reagiertem Gas angeströmt wird. Diese Maßnahme ist insbesondere für die Wasserdampfreformierung von Methanol vorteilhaft. In diesem Fall enthält das teilweise reagierte Gas bereits etwas Wasserstoff. Dieser Wasserstoff kann zur Formierung von zuvor unformiertem Katalysatormaterial verwendet werden, z.B. zur Reduktion eines Metalloxids als unformiertem Material in das freie Metall als dem formierten Katalysatormaterial. Folglich ermöglicht es diese in den Reaktor integrierte Formiereinrichtung, das Katalysatormaterial in seinem meist viel problemloser handhabbaren, unformierten Zustand im Vorratsbehälter zu bevorraten.

Die Erfindung sieht ferner vor, dass an der Einlaßstelle eine gasdurchlässige, wärmeleitfähige Reaktionsleitplatte angeordnet ist, und zwar dergestalt, daß das Katalysatormaterial aus dem Vorratsbehälter auf der gasstromabgewandten Seite der Platte in den Reaktionsraum eintritt. Mit der Platte läßt sich daher die Menge an Gas, welche das in den Reaktionsraum eintretende Katalysatormaterial beaufschlagt, in bedarfsgerechter Weise steuern. Dies ist insbesondere dann von Bedeutung, wenn unformiertes Katalysatormaterial bevorratet wird. Dieses kann dann in einer steuerbaren Reaktion an der in Gasströmungsrichtung hinteren Seite der Reaktionsleitplatte formiert werden, z.B. mit der bereits gebildeten Wasserstoffmenge der Reformierungsreaktion. Die bei dieser exothermen Reaktion entstehende Wärme kann von der wärmeleitfähigen Reaktionsleitplatte abgeleitet werden, so daß Überhitzungen vermieden werden. Die abgeleitete Wärme kann dem auf der gegenüberliegenden Plattenseite befindlichen, bereits formierten und die endotherme Methanolreformierungsreaktion katalysierenden Katalysatormaterial zugeleitet werden.

Der Reformierungsreaktor beinhaltet bei einer Weiterbildung der Erfindung eine im Vorratsbehälter angeordnete Einrichtung zur Ausübung eines lagefixierenden Preßdrucks auf das Katalysatormaterial. Da der Vorratsbehälter mit dem Reaktionsraum in Verbindung steht, wird damit im allgemeinen gleichzeitig auch die Katalysatorschüttung im Reaktionsraum lagefixiert. Diese Lagefixierung minimiert Abrieberscheinungen in der Katalysatorschüttung, wie sie ansonsten besonders bei mobilen Anwendungen aufgrund der auf den Reaktor wirkenden Erschütterungen auftreten.

Bei einem weitergebildeten Reformierungsreaktor besitzt der Vorratsbehälter eine Entlüftungseinrichtung, so daß Gase, die beispielsweise aufgrund einer Katalysatorformierungsreaktion an der Verbindungsstelle zwischen Vorratsbehälter und Reaktionsraum in den Vorratsbehälter gelangen, nach außen abgeführt werden können.

Bei einem weitergebildeten Reformierungsreaktor ist das Katalysatormaterial im Vorratsbehälter in unformiertem Zustand bevorratet. Da das unformierte Material meist weniger reaktiv ist als das Katalysatormaterial im formierten Zustand, erleichtert dies die Handhabung des Materials vor und während des Einbringens in den Vorratsbehälter. Zudem sind keine besonderen Maßnahmen erforderlich, um das Katalysatormaterial im Vorratsbehälter auch bei längerer Lagerzeit im formierten Zustand zu halten.

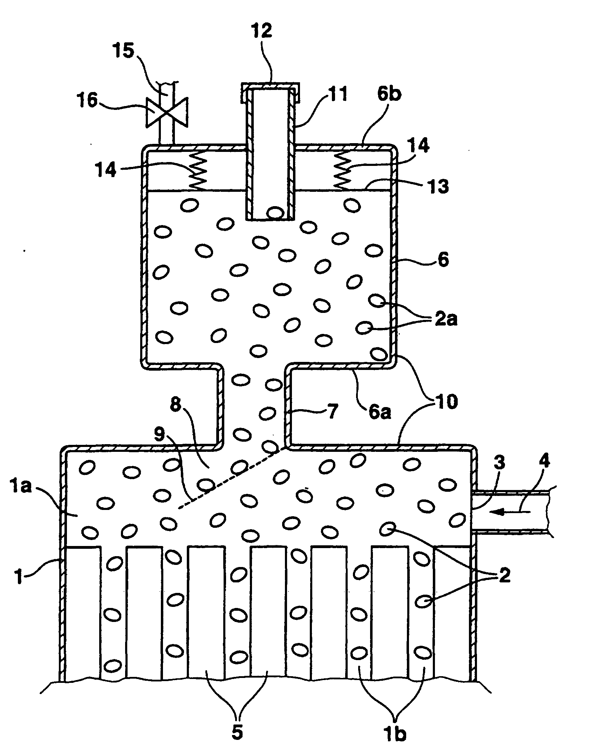

Eine bevorzugte Ausführungsform der Erfindung ist in der Zeichnung dargestellt und wird nachfolgend beschrieben.

Die einzige Figur zeigt eine schematische, teilweise Längsschnittansicht eines Reformierungsreaktors mit Reaktionsraum und angekoppeltem Vorratsbehälter.

Der in der Figur mit seinem erfindungswesentlichen Teil schematisch gezeigte Reformierungsreaktor ist insbesondere zur Wasserdampfreformierung von Methanol in brennstoffzellenbetriebenen Kraftfahrzeugen einsetzbar, um den für die Brennstoffzellen benötigten Wasserstoff aus flüssig mitgeführtem Methanol zu erzeugen. Der Reaktor beinhaltet einen nur in seinem oberen Bereich wiedergegebenen Reaktionsraum 1, der mit einer Katalysatorpelletschüttung 2 gefüllt ist, wobei das Katalysatormaterial so gewählt ist, daß es die gewünschte Reformierungsreaktion katalysiert. Für die Wasserdampfreformierung von Methanol eignet sich z.B. ein Cu/ZnO/Al₂O₃-Material, wobei das Katalysatormaterial im Reaktionsraum 1 in formiertem, d.h. katalytisch aktivem Zustand vorliegt, indem es z.B. eine freie Metallkomponente, wie Cu, aufweist. Der obere Teil des Reaktionsraums 1 bildet einen Gaseinlaßraum 1a, dem über einen seitlichen Einlaß 3 ein zu reformierender Gasstrom 4 zugeführt wird, z.B. ein Methanol/Wasserdampf-Gemisch. An den Gaseinlaßraum 1a schließen sich nach unten Reaktionsraumkanäle 1b an, die an Temperierfluidkanäle 5 angrenzen, durch die ein Temperierfluid hindurchgeleitet wird, um den Reaktionsraum 1 auf einer für die Durchführung der Reformierungsreaktion geeigneten Temperatur zu halten.

Über dem Reaktionsraum 1 ist ein Katalysatorvorratsbehälter 6 angeordnet, der mit dem Reaktionsraum 1 über einen Nachfüllkanal 7 in Verbindung steht. Im Vorratsbehälter 6 ist Katalysatormaterial 2a bevorratet, und zwar vorzugsweise im leicht handhabbaren, unreformierten Zustand, der z.B. eine Metalloxidkomponente, wie CuO, umfaßt, die mittels einer exothermen Reduktionsreaktion in die für die Reformierungsreaktion katalytisch aktive, formierte, freie Metallkomponente, z.B. Cu, umgewandelt werden kann. Der Nachfüllkanal 7 erstreckt sich von einem mittigen Bereich des Bodens 6a des Vorratsbehälters zu einer Katalysatoreinlaßstelle 8 des Reaktionsraums 1, die sich in einem mittigen Bereich an der Oberseite des Gaseinlaßraums 1a des Reaktionsraums 1 befindet. Die Einlaßstelle 8 ist damit um etwa die halbe Breite des Reaktionsraums 1 vom Gaseinlaß 3 entfernt.

An der Einlaßstelle 8 ist eine perforierte Reaktionsleitplatte 9 aus einem wärmeleitfähigen Blechmaterial in spezieller Weise angeordnet. Sie ist längs einer oberen Kante auf einer Seite der Einlaßstelle 8 an der Innenseite eines den Reaktionsraum 1 und den Vorratsbehälter 6 samt Verbindungskanal 7 umschließenden Reaktorgehäuses 10 fixiert und erstreckt sich von dort unter teilweiser Abschirmung der Einlaßstelle 8 schräg nach unten in den Gaseinlaßraum 1a. Das Reaktionsleitblech 9 wird daher auf seiner dem Gaseinlaß 3 zugewandten Seite von dem in den Gaseinlaßraum 1a eingespeisten Gasstrom 4 angeströmt. Da der Gasstrom 4 bereits die halbe Breite des mit aktivem Katalysatormaterial befüllten Gaseinlaßraums 1a durchquert hat, enthält er bereits einen gewissen Anteil an Reformierungsreaktionsprodukten, wenn er das Reaktionsleitblech 9 erreicht. Im Fall der Wasserdampfreformierung von Methanol enthält der das Reaktionsleitblech 9 anströmende Gasstrom folglich bereits eine gewisse Menge Wasserstoff.

Die Perforation des Reaktionsleitblechs 9 ist so gewählt, daß einerseits das anströmende Gas in einer definierten Menge hindurchströmen kann, der Durchmesser der Perforationslöcher andererseits jedoch geringer ist als der Pelletdurchmesser der Katalysatorschüttung 2. Das Reaktionsleitblech 9 bildet damit eine Rutsche, über die das im Vorratsbehälter 6 bevorratete Katalysatormaterial 2a in den Reaktionsraum 1, speziell in den Gaseinlaßraum 1a, automatisch nachrutschen kann, wenn das Volumen der Katalysatorschüttung 2 im Reaktionsraum 1 beispielsweise aufgrund eines durch die Betriebsbelastung bedingten Volumenschwunds abzunehmen droht. Dabei rutscht das aus dem Vorratsbehälter 6 kommende Katalysatormaterial 2a auf der gasstromabgewandten Seite des Reaktionsleitblechs 9 in den Gaseinlaßraum 1a nach und kommt so mit der durch die Größe und Anzahl der Perforationslöcher im Reaktionsleitblech 9 bestimmten Menge an durch das Reaktionsleitblech 9 hindurchströmendem Gas in Kontakt. Dadurch kann das in den Gaseinlaßraum 1a nachrutschende Katalysatormaterial in kontrollierter Weise formiert werden, wenn es in unformiertem Zustand im Vorratsbehälter 6 vorliegt.

So kann im Fall der Wasserdampfreformierung von Methanol der Wasserstoff, der auf dem Strömungsweg zwischen Gaseinlaß 3 und Reaktionsleitblech 9 gebildet wurde, eine exotherme Formierungsreaktion bewirken, mit der unformiertes, als Metalloxid bevorratetes Katalysatormaterial 2a unter Wasserbildung in das freie Metall formiert werden kann. Das perforierte Reaktionsleitblech 9 verhindert eine volle Beaufschlagung des in den Reaktionsraum 1 eintretenden, unformierten Katalysatormaterials 2a mit dem wasserstoffhaltigen Gasstrom und damit die Gefahr einer Überhitzung an der Katalysatoreinlaßstelle 8 durch die exotherme Formierungsreaktion. Außerdem kann die bei der Formierungsreaktion gebildete Wärme über das wärmeleitfähige Reaktionsleitblech 9 auf dessen gegenüberliegende Seite abgeleitet werden, wo sich das bereits formierte, zur Durchführung der endothermen Methanolreformierungsreaktion katalytisch aktive Katalysatormaterial 2 befindet. Dieser kontrollierte Wärmeeintrag in den methanolreformierenden Bereich des Reaktionsraums 1 unterstützt die Aufrechterhaltung der erforderlichen Reformierungsreaktionstemperatur. Gleichzeitig hat diese in den Reaktor integrierte Katalysatorformierungseinrichtung den Vorteil, daß das Katalysatormaterial in seinem an Luft stabileren und damit einfacher handhabbaren, unreformierten Zustand in den Vorratsbehälter 6 eingefüllt und dort bevorratet werden kann.

Der Vorratsbehälter 6 beinhaltet zum Einbringen des zu bevorratenden Katalysatormaterials 2a ein Befüllrohr 11, das in die Behälteroberseite eingebracht und mit einem aufschraubbaren Deckel 12 verschließbar ist. Weiter beinhaltet der Vorratsbehälter 6 eine Druckerzeugungseinrichtung zur Ausübung eines Preßdrucks auf das bevorratete Katalysatormaterial 2a.

Diese Einrichtung besteht aus einer gasdurchlässig perforierten Druckplatte 13 und mehreren, als Druckfedern wirkende Schraubenfedern 14, die sich zum einen an der Innenseite der Decke 6b des Vorratsbehälters und zum anderen gegen die Druckplatte 13 abstützen. Dadurch übt die beweglich im Vorratsbehälter 6 angeordnete Druckplatte 13 einen lagestabilisierenden Preßdruck auf das bevorratete Katalysatormaterial 2a aus. Da dieses Material 2a über den Nachfüllkanal 7 direkt in Kontakt mit der Katalysatorschüttung 2 des Reaktionsraums 1 steht, wirkt dieser Preßdruck auch auf die Katalysatorschüttung 2 im Reaktionsraum 1 lagefixierend. Diese Lagefixierung minimiert Abrieberscheinungen, wie sie bei loser Katalysatorschüttung durch gasstrombedingtes Aufwirbeln der Pellets und/oder durch Erschütterungen verursacht werden, wie sie insbesondere bei mobilen Anwendungen auftreten.

Die den Preßdruck auf das Katalysatormaterial 2, 2a ausübende Einrichtung hat noch einen weiteren vorteilhaften Effekt. Zum einen unterstützt sie das selbsttätige Nachrutschen von Katalysatormaterial aus dem Vorratsbehälter 6 in den Reaktionsraum 1, das beim gezeigten Beispiel auch bereits aufgrund der Schwerkraft erfolgt, indem der Vorratsbehälter 6 auf einem über demjenigen des Reaktionsraums 1 liegenden Niveau angeordnet ist. Zum anderen ermöglicht die Bereitstellung des Preßdrucks auf das Katalysatormaterial 2, 2a durch die. Druckplatte 13 im Vorratsbehälter 6 auch dann noch das selbsttätige Nachrutschen des Katalysatormaterials, wenn in Abänderung des gezeigten Beispiels der Vorratsbehälter 6 nicht über, sondern beispielsweise seitlich von dem Reaktionsraum 1 angeordnet ist.

An seiner Oberseite ist der Vorratsbehälter 6 mit einer Entlüftungseinrichtung versehen, die ein Entlüftungsrohr 15 mit eingebrachtem Entlüftungsventil 16 beinhaltet. Über die Entlüftungseinrichtung kann Gas, das gegebenenfalls aufgrund der Formierungsreaktion an der Eintrittsstelle 8 zum Reaktionsraum 1 entsteht und über den Nachfüllkanal 7 in den Vorratsbehälter 6 gelangt, nach Durchtritt durch die gasdurchlässige Druckplatte 13 aus dem Vorratsbehälter 6 entweichen.

Es versteht sich, daß je nach Anwendungsfall anstelle von unformiertem auch teilweise oder vollständig formiertes Katalysatormaterial im Vorratsbehälter 6 bevorratet werden kann. Wie die obige Beschreibung des gezeigten Beispiels deutlich macht, ist bei dem erfindungsgemäßen Reformierungsreaktor eine zuverlässige, einfache automatische Nachfüllbarkeit von Katalysatormaterial in den Reaktionsraum 1 gegeben, so daß kein Aktivitätsverlust des Reaktors durch Zusammensacken der Katalysatorschüttung im Reaktionsraum auftritt, was einen kompakteren Reaktoraufbau ermöglicht und höhere Standzeiten des Reformierungsreaktors erlaubt. Bei der Anwendung in Fahrzeugen entfällt beim erfindungsgemäßen Reformierungsreaktor ein separater Wartungsvorgang zum Nachfüllen von unreformiertem Katalysatormaterial in den Reaktionsraum des Reaktors mit anschließendem Formieren desselben mit einem speziellen Formiergas. Vielmehr kann die Formierungsreaktion bei Bedarf in kontrollierter Weise ohne Unterbrechung des normalen Reformierungsbetriebs erfolgen. Selbstverständlich sind erfindungsgemäße Reformierungsreaktoren auch mit einem anderen als dem gezeigten Aufbau realisierbar. So können gegebenenfalls die Reaktionsleitplatte 9 und/oder die den Preßdruck auf das Katalysatormaterial ausübende Einrichtung entfallen, und die Reaktoren können hinsichtlich ihres eigentlichen Reaktorteils von jedem beliebigen der herkömmlichen Typen sein, insbesondere vom Rohrbündel- oder Plattenreaktortyp. Die Anwendung des erfindungsgemäßen Reformierungsreaktors ist nicht auf die Wasserdampfreformierung von Methanol beschränkt, sondern erfaßt sämtliche Anwendungen von Reformierungsreaktoren mit einem mit einer Katalysatorschüttung befüllten Reaktionsraum.

## Patentansprüche

1. Reformierungsreaktor, insbesondere zur Wasserdampfreformierung von Methanol, mit
- einem Reaktionsraum (1), in den eine Schüttung eines Katalysatormaterials (2) eingebracht ist und in den ein Gaseinlass (3) mündet, wobei über den Gaseinlass (3) dem Reaktionsraum (1) ein zu reformierender, durch den Reaktionsraum hindurchzuleitender Gasstrom (4) zuführbar ist, und
- einem Katalysatorvorratsbehälter (6), der mit dem Reaktionsraum (1) über einen Nachfüllkanal (7) derart in Verbindung steht, dass Katalysatormaterial (2a) selbsttätig aus dem Vorratsbehälter in den Reaktionsraum (1) nachgefüllt wird,
wobei der Nachfüllkanal an einer Katalysatoreinlassstelle (8) in den Reaktionsraum (1) mündet, die von dem Gaseinlass (3) derart beabstandet ist, dass der durch den Reaktionsraum (1) hindurchzuleitende Gasstrom (4) schon teilweise reformiert ist, wenn er mit über den Nachfüllkanal (7) in den Reaktionsraum (1) eintretendem Katalysatormaterial (2) in Kontakt tritt,
**gekennzeichnet durch** eine gasdurchlässige, wärmeleitfähige Reaktionsleitplatte (9), die an der Einlassstelle (8) derart angeordnet ist, dass das aus dem Vorratsbehälter (6) nachgefüllte Katalysatormaterial (2a) auf der gasstromabgewandten Seite der Reaktionsleitplatte (9) in den Reaktionsraum (1) eintritt.

2. Reformierungsreaktor nach Anspruch 1,
**dadurch gekennzeichnet, dass** die Reaktionsleitplatte (9) perforiert ist.

3. Reformierungsreaktor nach Anspruch 1 oder 2,
**dadurch gekennzeichnet, dass** die Reaktionsleitplatte (9) sich von der Einlassstelle (8) aus schräg nach unten in den Reaktionsraum (1) erstreckt.

4. Reformierungsreaktor nach einem der vorangehenden Ansprüche,
**dadurch gekennzeichnet, dass** der Gaseinlass (3) seitlich in den Reaktionsraum (1) mündet.

5. Reformierungsreaktor nach einem der vorangehenden Ansprüche,
**dadurch gekennzeichnet, dass** die Katalysatoreinlassstelle (8) in einem mittigen Bereich an der Oberseite des Reaktionsraums (1) angeordnet ist.

6. Reformierungsreaktor nach einem der vorangehenden Ansprüche,
**gekennzeichnet durch** eine im Vorratsbehälter (6) angeordnete Einrichtung (13, 14) zur Ausübung eines lagefixierenden Pressdrucks auf das Katalysatormaterial (2, 2a).

7. Reformierungsreaktor nach einem der vorangehenden Ansprüche,
**gekennzeichnet durch** eine dem Vorratsbehälter (6) zugeordnete Entlüftungseinrichtung (15, 16).

8. Reformierungsreaktor nach einem der vorangehenden Ansprüche,
**dadurch gekennzeichnet, dass** das Katalysatormaterial (2a) im Vorratsbehälter (6) in unformiertem Zustand bevorratet ist.

## Claims

1. Reforming reactor in particular for water vapor reforming of methanol, having
- a reaction space (1) into which a bulk of a catalyst material (2) is introduced and into which a gas inlet (3) leads, wherein a flow of gas (4) to be reformed and to be led through the reaction space can be supplied to the reaction space (1) via the gas inlet (3), and
- a catalyst storage reservoir (6), which is in communication with the reaction space (1) via a refill channel (7) such that catalyst material (2a) is automatically refilled from the storage reservoir into the reaction space (1), wherein the refill channel leads into the reaction space (1) at a catalyst inlet location (8), which is spaced from the gas inlet (3) such that the flow of gas (4) to be led through the reaction space (1) is already partially reformed if it contacts catalyst material (2) entering the reaction space (1) via the refill channel (7),
**characterized by** a gas permeable, heat conducting reaction baffle plate (9), which is arranged at the inlet location (8) such that the catalyst material (2a) refilled from the storage reservoir (6) enters the reaction space (1) at the side of the reaction baffle plate (9) opposite the flow of gas.

2. Reforming reactor according to claim 1, **characterized in that** the reaction baffle plate (9) is perforated.

3. Reforming reactor according to claim 1 or 2, **characterized in that** the reaction baffle plate (9) extends from the inlet location (8) obliquely downwards into the reaction space (1).

4. Reforming reactor according to one of the preceding claims, **characterized in that** the gas inlet (3) laterally leads into the reaction space (1).

5. Reforming reactor according to one of the preceding claims, **characterized in that** the catalyst inlet location (8) is arranged in a centric region on the upper side of the reaction space (1).

6. Reforming reactor according to one of the preceding claims, **characterized by** a means (13,14) being arranged in the storage reservoir (6) for exertion of a localizing pressing power onto the catalyst material (2, 2a).

7. Reforming reactor according to one of the preceding claims, **characterized by** a ventilation means (15, 16) associated to the storage reservoir (6).

8. Reforming reactor according to one of the preceding claims, **characterized in that** the catalyst material (2a) is stored in the storage reservoir (6) in an unformed state.

## Revendications

1. Réacteur de reformage, en particulier pour le reformage à la vapeur d'eau de méthanol, avec
- un compartiment de réaction (1) qui est rempli d'un lit catalytique (2) et dans lequel débouche une entrée pour l'admission de gaz (3), un flux gazeux (4) à reformer et à amener à travers le compartiment de réaction (1) pouvant être introduit dans le compartiment de réaction (1) via ladite entrée (3), et un réservoir (6) contenant le catalyseur, lequel réservoir se trouve de telle sorte en contact avec le compartiment de réaction (1) via un canal de recharge (7) que le matériau catalyseur (2a) est automatiquement rechargé dans le compartiment de réaction (1) à partir dudit réservoir,
le canal de recharge débouchant dans le compartiment de réaction (1) à l'entrée pour le catalyseur (8), laquelle se trouve à une distance telle de l'entrée pour l'admission de gaz (3) que le flux gazeux (4) à amener à travers le compartiment de réaction (1) est déjà partiellement reformé lorsqu'il entre en contact avec le matériau catalyseur (2) pénétrant via le canal de recharge (7) dans le compartiment de réaction (1),
**caractérisé par** une plaque active de réaction (9) perméable au gaz et thermoconductrice laquelle est disposée de telle sorte à l'entrée pour le catalyseur (8) que le matériau catalyseur (2a) rechargé à partir dudit réservoir (6) pénètre du côté opposé au flux gazeux dans le compartiment de réaction (1).

2. Réacteur de reformage selon la revendication 1,
**caractérisé en ce que** la plaque active de réaction (9) est perforée.

3. Réacteur de reformage selon la revendication 1 ou 2,
**caractérisé en ce que** la plaque active de réaction (9) s'étend obliquement vers le bas dans le compartiment de réaction (1) depuis l'entrée pour le catalyseur (8).

4. Réacteur de reformage selon l'une des revendications précédentes, **caractérisé en ce que** l'entrée pour l'admission de gaz (3) débouche latéralement dans le compartiment de réaction (1).

5. Réacteur de reformage selon l'une des revendications précédentes, **caractérisé en ce que** l'entrée pour le catalyseur (8) est disposée dans une zone médiane de la face supérieure du compartiment de réaction (1).

6. Réacteur de reformage selon l'une des revendications précédentes, **caractérisé par** un aménagement (13, 14) disposé dans le réservoir (6) contenant le catalyseur et servant à exercer une pression par effet de poussée sur le matériau catalyseur (2, 2a) en vue de maintenir celui-ci fixe en position.

7. Réacteur de reformage selon l'une des revendications précédentes, **caractérisé par** un dispositif de purge d'air (15, 16) associé au réservoir (6) contenant le catalyseur.

8. Réacteur de reformage selon l'une des revendications précédentes, **caractérisé en ce que** le matériau catalyseur (2a) est stocké à l'état non formé dans ledit réservoir (6).
